# EUROPÄISCHE PATENTSCHRIFT

(11) **EP 2 814 713 B1**
(45) Veröffentlichungstag und Bekanntmachung des Hinweises auf die Patenterteilung: **31.10.2018**
(21) Anmeldenummer: 13704104.2
(22) Anmeldetag: 13.02.2013
(51) Int. Cl.: B60B 39/02, B60B 39/10, B61C 15/10

(54) **ENDSTÜCK FÜR EINE PARTIKELSTREUANLAGE FÜR EIN SCHIENENFAHRZEUG**
END PIECE FOR A PARTICLE DISTRIBUTOR FOR A RAILWAY VEHICLE
EMBOUT POUR UN DISPOSITIF DE DISPERSION DE PARTICULES SUR UN VÉHICULE FERROVIAIRE

(30) Priorität: 14.02.2012 DE 102012006234
(43) Veröffentlichungstag der Anmeldung: 24.12.2014
(73) Patentinhaber: KNORR-BREMSE Systeme für Schienenfahrzeuge GmbH, 80809 München (DE)
(72) Erfinder: KRISMANIC, Georg, A-1020 Wien (AT)
(86) Internationale Anmeldenummer: PCT/EP2013/052810
(87) Internationale Veröffentlichungsnummer: WO 2013/120865

(56) Entgegenhaltungen:
- WO-A1-2004/080778
- WO-A1-2005/077679
- DE-A1- 4 202 413
- DE-U1- 29 711 805
- US-A- 4 747 627

## Beschreibung

Die vorliegende Erfindung betrifft ein Endstück für eine Partikelstreuanlage eines Schienenfahrzeugs sowie eine Partikelstreuanlage für ein Schienenfahrzeug mit einem derartigen Endstück und ein entsprechendes Schienenfahrzeug (siehe z.B. die WO 2005/077679 A1).

Bei Schienenfahrzeugen hängt die Wirkung einer Bremse oder einer Antriebseinrichtung entscheidend von dem Kraftschluss zwischen Rädern und Schiene ab, denn eine Antriebskraft oder Bremskraft wird über die Räder auf die Schiene übertragen. Dabei bestimmt ein als Adhäsionsbeiwert oder Kraftschlussbeiwert bezeichneter Parameter das auf die Schiene übertragbare Maß an Bremskraft oder Antriebskraft. Wird mehr Kraft zum Bremsen oder Beschleunigen des Schienenfahrzeugs auf ein Rad ausgeübt, als gemäß einem herrschenden Kraftschluss über den Rad-Schiene-Kontakt aufgenommen werden kann, kann dies zu einem Gleiten, Schleudern oder Blockieren des Rades führen, was ein unerwünschter Zustand ist. Der Kraftschluss zwischen einem Rad und einer Schiene hängt stark von den Reibungsbedingungen zwischen Rad und Schiene ab. Bei hoher Reibung ist ein hoher Kraftschluss möglich, während bei einer niedrigen Reibung, etwa bei Wasser oder Eis auf der Schiene, nur ein niedriger Kraftschluss herrscht. Um die Effizienz insbesondere von Bremsungen zu verbessern, können Schienenfahrzeuge mit Partikelstreuanlagen ausgestattet sein, über die ein Streugut, beispielsweise Sand, auf eine Schiene ausgebracht werden kann. Durch das Streugut kann die Adhäsion zwischen Rad und Schiene und somit der Kraftschluss verbessert werden.

Eine Aufgabe der vorliegenden Erfindung besteht darin, den Betrieb einer Partikelstreuanlage eines Schienenfahrzeugs zu verbessern. Insbesondere soll eine Überwachung der Partikelstreuanlage verbessert werden.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung kann ein Schienenfahrzeug oder Zug einen oder mehrere Wagen mit oder ohne eigenen Antrieb und/oder ein Zugfahrzeug in beliebiger Kombination bezeichnen. Insbesondere kann ein Schienenfahrzeug Triebwagen aufweisen. Eine Partikelstreuanlage kann dazu ausgebildet sein, Streugut in Form von Partikeln zum Ausbringen auf eine Schiene bereitzustellen, insbesondere im Bereich eines Rad-Schiene-Kontaktes. Eine Partikelstreuanlage kann einen oder mehrere Vorratsbehälter zur Aufnahme und Bereitstellung von Streugut beziehungsweise Partikeln aufweisen. Streugut kann sich insbesondere aus Partikeln zusammensetzen. Die Partikel können dazu geeignet sein, einen Kraftschluss zwischen Schiene und Rad zu verbessern, etwa indem sie eine Reibung zwischen Rad und Schiene erhöhen. Streugut kann beispielsweise Sand und/oder keramische Partikel umfassen. Eine Partikelstreuanlage kann durch eine elektronische Steuervorrichtung ansteuerbar sein, um Partikel in einem gewünschten Maß bereitzustellen und/oder auszubringen. Eine Partikelstreuanlage kann insbesondere eine Partikelleiteinrichtung aufweisen. Eine Partikelleiteinrichtung kann dazu ausgebildet sein, einen von der Partikelstreuanlage bereitgestellten Partikelstrom insbesondere in Richtung der Schiene zu leiten. Eine Partikelleiteinrichtung kann starr ausgebildet sein, beispielsweise als ein Partikelleitrohr, oder flexibel und/oder elastisch, beispielsweise als ein Partikelleitschlauch. Mit einem Partikelstrom kann ein Luftstrom vermischt sein, insbesondere bei einer pneumatischen Partikelstreuanlage. Es kann vorgesehen sein, dass die Partikelstreuanlage dazu ausgebildet ist, Partikel pneumatisch, mechanisch und/oder unter Ausnutzung der Schwerkraft in eine Partikelleiteinrichtung einzubringen. Ein Endstück für eine Partikelstreuanlage kann dazu ausgebildet sein, an einem der Schiene zugewandten oder zuwendbaren Ende einer Partikelleiteinrichtung angebracht oder anbringbar zu sein. Das Endstück kann insbesondere separat von der Partikelleiteinrichtung ausgebildet sein und/oder an der Partikelleiteinrichtung angebracht oder anbringbar sein. Es ist vorstellbar, dass das Endstück vermittels einer geeigneten Befestigungsvorrichtung an einer Partikelleiteinrichtung anbringbar ist. Ein montierter Zustand des Endstücks kann ein Zustand sein, in welchem das Endstück an der Partikelleiteinrichtung angebracht ist. Insbesondere kann in einem montierten Zustand das Endstück derart an der Partikelleiteinrichtung angebracht sein, dass ein Partikelstrom von der Partikelleiteinrichtung in das Endstück, durch das Endstück hindurch und aus dem Endstück hinaus strömen kann. Eine Befestigungsvorrichtung kann beispielsweise Adapter und/oder eine Schellenanordnung und/oder eine Schraubeinrichtung umfassen. Die Verwendung eines separaten Endstücks kann insbesondere die Wartung und die Reparatur der Partikelstreuanlage erleichtern, da ein Endstück besonders leicht zugänglich ist. Ein Endstück kann allgemein eine Eingangsöffnung und eine Ausgangsöffnung aufweisen. Zwischen Eingangsöffnung und Ausgangsöffnung kann ein Partikelströmungsraum ausgebildet sein, in welchem ein Partikelstrom von der Eingangsöffnung zur Ausgangsöffnung zu strömen vermag. Die Ausgangsöffnung kann eine Öffnung in die Umgebung oder den Außenbereich sein, durch welche insbesondere ein Partikelstrom aus dem Endstück ins Freie und auf die Schiene zu strömen vermag. Eine Eingangsöffnung kann derart ausgebildet sein, dass im montierten Zustand des Endstücks ein Partikelstrom von einer Partikelleiteinrichtung über die Eingangsöffnung in das Endstück und/oder den Partikelströmungsraum einzuströmen vermag. Es ist vorstellbar, dass eine Eingangsöffnung im montierten Zustand einen Übergang von der Partikelleiteinrichtung zum Endstück insbesondere für einen Partikelstrom definiert. Eine Ausgangsöffnung kann abgeschrägt ausgebildet sein. Ein Endstück kann ein flexibles Endstück sein. Ein solches flexibles Endstück ist insbesondere weniger empfindlich für Kollisionen und mechanische Beschädigungen als ein starres Endstück. Ein Endstück kann beispielsweise als flexibel angesehen werden, wenn sich in einem montierten und/oder unmontierten Zustand die Ausgangsöffnung relativ zur Eingangsöffnung verschieben und/oder bewegen lässt. Somit kann auch ein über eine flexible Verbindung mit einer Partikelleiteinrichtung verbundenes Endstück als flexibles Endstück angesehen werden. Ein flexibles Endstück kann eine oder mehrere elastische Komponenten aufweisen. Es ist vorstellbar, dass in einem montierten Zustand die Eingangsöffnung an einem entsprechenden Strömungsausgang der Partikelleiteinrichtung befestigt ist. Ein Endstück kann eine Längserstreckung aufweisen, welche die Ausgangsöffnung und die Eingangsöffnung umfasst. Es ist vorstellbar, dass die Längserstreckung des Endstücks über die Eingangsöffnung hinaus geht. Beispielsweise kann das Endstück eine kragenartige Struktur ausbilden, welche dazu ausgebildet ist, einen Teil einer Partikelleiteinrichtung zu umgeben. Eine derartige kragenartige Struktur kann zum Anbringen des Endstücks an der Partikelleiteinrichtung vorgesehen sein. Es kann vorgesehen sein, dass die Eingangsöffnung im Inneren des Endstücks angeordnet ist. Ein Partikelströmungsbereich kann von einer Innenbewandung umgeben sein, welche den Partikelströmungsraum definieren kann. Eine ausgangsöffnungsseitige Stirnseite des Endstücks kann in Richtung des Außenbereichs zeigen. Es ist vorstellbar, dass eine Flächennormale einer ausgangsöffnungsseitigen Stirnseite parallel zur Flächennormalen der Querschnittfläche der Ausgangsöffnung steht. Es kann zweckmäßig sein, wenn die Querschnittsfläche der Ausgangsöffnung gleich oder größer ist als die Querschnittsfläche der Eingangsöffnung. Alternativ oder zusätzlich kann vorgesehen sein, dass eine von der Ausgangsöffnung definierte Strömungsquerschnittfläche für den Partikelstrom gleich oder größer ist als eine von der Eingangsöffnung definierte Strömungsquerschnittsfläche für den Partikelstrom. Insbesondere ist vorstellbar, dass sich der Durchmesser und/oder die Querschnittsfläche des Partikelströmungsraums des Endstücks von der Eingangsöffnung bis zur Ausgangsfläche vergrößert. Das Endstück kann derart ausgebildet sein, dass sein minimaler Durchmesser der Eingangsöffnung, der Ausgangsöffnung und des Partikelströmungsraums mindestens dem Durchmesser einer Öffnung der Partikelleiteinrichtung entspricht, mit welcher das Endstück verbunden oder verbindbar ist, und/oder mindestens dem geringsten Durchmesser, welcher von der Partikelleiteinrichtung für einen Partikelstrom bereitgestellt ist. Es ist vorstellbar, dass ein Endstück einen Außendurchmesser aufweist, der sich über eine Längserstreckung des Endstücks ändern kann. Der Außendurchmesser kann als Durchmesser einer Außenwandung des Endstücks definiert sein, welche in berührendem Kontakt mit einer Umgebung des Endstücks steht, insbesondere mit Außenluft. Insbesondere kann vorgesehen sein, dass ein Außendurchmesser des Endstücks sich ausgangsöffnungsseitig verringert. Es kann eine Verjüngung des Außendurchmessers zur Ausgangsöffnung hin vorgesehen sein. Durch eine derartige Verjüngung wird das Abrutschen von das Endstück außen umgebenden Eisstücken erleichtert. Es kann vorgesehen sein, dass sich ein Innendurchmesser und/oder ein Strömungsquerschnitt des Endstücks, etwa ein Innendurchmesser ein Strömungsquerschnitt eines Partikelströmungsraums und/oder eines ersten Schlauchstücks, zur Ausgangsöffnung hin und/oder ausgangsöffnungsseitig vergrößert. Insbesondere kann ein Abschnitt des Endstücks derart ausgebildet sein, dass sich einerseits der Innendurchmesser des Endstücks zur Ausgangsöffnung und/oder ausgangsöffnungsseitig hin vergrößert und andererseits sich der Außendurchmesser des Endstücks verjüngt. Hierzu kann beispielsweise vorgesehen sein, dass eine Wanddicke eines ein erstes Schlauchstück umgebenden äußeren Schlauchstücks und/oder gegebenenfalls eine Wanddicke eines eine Stirnseite ausbildenden Schlauchstück ausgangsöffnungsseitig dünner wird und/oder der Außendurchmesser des äußeren Schlauchstücks und gegebenenfalls des die Stirnseite ausbildenden Schlauchstücks sich verjüngt. Eine ausgangsöffnungsseitige Verjüngung oder Vergrößerung kann die Ausgangsöffnung und/oder einen die Ausgangsöffnung umfassenden Bereich betreffen. Ein Schlauchstück kann flexibel und/oder elastisch ausgebildet sein, etwa wie ein Schlauch. Ein elastisches Schlauchstück kann aus einem elastischen Material hergestellt sein und/oder ein elastisches Material umfassen. Ein elastisches Material kann insbesondere ein gummihaltiges oder gummiartiges Material und/oder ein Silikonmaterial umfassen oder sein. Es kann vorgesehen sein, dass ein elastisches Schlauchstück elektrisch nicht leitend oder elektrisch isolierend ausgebildet sein. Es ist auch vorstellbar, dass ein Schlauchstück starr ausgebildet ist, etwa als Schlauchhülse. Ein starres Schlauchstück kann elektrisch leitend ausgebildet sein. Ein starr ausgebildetes Schlauchstück kann beispielsweise aus Metall und/oder einem unelastischen Kunststoff hergestellt sein. Ein Schlauchstück kann allgemein einen Eingang, einen Ausgang und einen hohlen und/oder ausfüllbaren Schlauchinnenbereich aufweisen, welcher Eingang und Ausgang miteinander verbindet. Es ist vorstellbar, dass ein Endstück mindestens eine Funktionseinrichtung umfasst. Funktionseinrichtungen können allgemein elektrisch betriebene oder betreibbare Einrichtungen sein. Eine Einrichtung kann als elektrisch betrieben oder elektrisch betreibbar angesehen werden, wenn sie durch Versorgung mit elektrischer Energie betriebsfähig wird. Eine Funktionseinrichtung kann eine Einrichtung sein, welche es vermag, im Betrieb eine oder mehrere gewünschte Funktionen zu erfüllen. Eine Funktionseinrichtung kann eine steuerbare Einrichtung sein und/oder eine elektronische Steuereinrichtung umfassen oder als eine solche ausgebildet sein. Es ist vorstellbar, dass eine Funktionseinrichtung beispielsweise eine Sensoreinrichtung oder eine Heizeinrichtung umfasst oder als solche ausgebildet ist. Eine Sensoreinrichtung kann eine Temperatursensoreinrichtung sein, welche dazu ausgebildet ist, an einer oder mehreren Stellen des Endstücks eine Temperatur zu messen. Dazu kann die Temperatursensoreinrichtung einen oder mehrere geeignete Temperaturfühler aufweisen. Insbesondere kann eine Temperatursensoreinrichtung dazu ausgebildet sein, die Temperatur innerhalb und/oder an einem Rand eines Partikelströmungsraums im Endstück und/oder bei der Ausgangsöffnung und/oder innerhalb eines Schlauchstücks, etwa einem ersten Schlauchstück oder einem äußeren Schlauchstück, und/oder eine Temperatur einer Heizeinrichtung zu messen. Eine Temperatursensoreinrichtung kann einen Thermostat aufweisen. Eine Fördersensoreinrichtung kann dazu ausgebildet sein, einen im Partikelströmungsraum durch das Endstück strömenden Partikelstrom und/oder einen aus dem Endstück austretenden Partikelstrom zu erfassen. Eine Fördersensoreinrichtung kann dazu ausgebildet sein, den Partikelstrom optisch, elektrisch oder auf andere geeignete Art zu erfassen oder zu ermitteln. Insbesondere kann die Fördersensoreinrichtung dazu ausgebildet sein, eine elektrische Ladungsverteilung und/oder die Verschiebung einer elektrischen Ladungsverteilung in einem Partikelstrom zu erfassen. Alternativ oder zusätzlich kann die Fördersensoreinrichtung dazu ausgebildet sein, die elektrische Kapazität und/oder Änderungen der elektrischen Kapazität des Partikelstroms zu erfassen. Die Fördersensoreinrichtung und/oder eine Steuereinrichtung kann dazu ausgebildet sein, basierend auf der Kapazität und/oder Kapazitätsänderungen des Partikelstroms die Dichte des Partikelstroms zu bestimmen. Es ist vorstellbar, dass die Fördersensoreinrichtung dazu ausgebildet ist, eine durch eine Strömung der Partikel erzeugte Ladungsverschiebung zu erfassen. Dadurch kann der physikalische Effekt ausgenutzt werden, dass Partikel eines Streuguts Oberflächenladungen aufweisen, die beispielsweise durch Reibungseffekte erzeugt werden können. Bewegen sich derart geladene Partikel in einem Partikelstrom, verschieben sich die Ladungen, wodurch sich beispielsweise in einem Tastelement oder einer Antenne einer Fördersensoreinrichtung Spiegelladungen ergeben können. Die Ladungen können dabei stochastisch verteilt sein, so dass sich in einem Partikelstrom kein einheitlicher Ladungsstrom ergibt. Die Fördersensoreinrichtung kann entsprechend ein oder mehrere Sensorelemente oder elektromagnetische Tastelemente umfassen, die elektrische und/oder magnetische Felder, insbesondere zeitlich veränderliche elektrische oder magnetische Felder, zu erfassen vermögen. Somit kann ein Tastelement oder Sensorelement als Antenne bezeichnet werden. Insbesondere kann eine Fördersensoreinrichtung eine oder mehrere Sensorelemente oder Tastelemente umfassen, die um einen Partikelströmungsraum des Endstücks angeordnet sind und/oder diesen umgeben. Beispielsweise kann eine Antenne vorgesehen sein, welche den Partikelströmungsraum ringförmig umgibt. Die Fördersensoreinrichtung kann insbesondere mindestens zwei Tastelemente aufweisen, die in einem definierten Abstand voneinander angeordnet sein können. Es ist vorstellbar, dass zwei oder mehr Tastelemente in Form einer Antenne implementiert sind, die geeignet geschaltet sind, um separate Tastelemente zu bilden. Eine derartige Anordnung kann in einer einzigen Antenne implementiert sein. Die Fördersensoreinrichtung oder eine damit zur Datenübermittlung verbundene Steuereinrichtung kann dazu ausgebildet sein, aus einer erfassten elektrischen Ladungsverteilung einen Partikelstrom und/oder aus einer erfassten elektrischen Kapazität des Partikelstroms eine Dichte des Partikelstroms zu bestimmen. Es kann insbesondere vorgesehen sein, dass die Fördersensoreinrichtung eine Antenne aufweist, welche den Partikelstrom und/oder elektrische Landungsverschiebungen im Partikelstrom und/oder eine Kapazität und/oder Kapazitätsänderung des Partikelstroms und/oder eine Dichte des Partikelstroms zu erfassen und/oder zu bestimmen vermag. Es ist vorstellbar, dass hierzu der Antenne eine geeignete Steuereinrichtung zugeordnet ist, welche eine Dichte und/oder einen Partikelstrom zu bestimmen vermag. Für den Fall, dass das Endstück eine Heizeinrichtung umfasst, kann ein Heizelement, etwa eine Heizspule oder Heizfolie, als Antenne für eine Fördersensoreinrichtung ausgebildet sein. Somit kann die Fördersensoreinrichtung in die Heizeinrichtung integriert sein. Es ist auch vorstellbar, dass die Fördersensoreinrichtung eine separat ausgeführte Antenne aufweist. Eine elektronische Steuereinrichtung kann allgemein dazu ausgebildet sein, Daten zu empfangen und/oder zu übermitteln und/oder auszuwerten und/oder eine oder mehrere Funktionseinrichtungen oder andere ansteuerbare Einrichtungen anzusteuern, etwa basierend auf Daten. Derartige Daten können in der Steuereinrichtung gespeichert sein und/oder auf Sensorsignalen einer oder mehrer Sensoreinrichtungen basieren und/oder Steuerparameter sein. Insbesondere kann eine Steuereinrichtung dazu ausgebildet sein, eine Einrichtung basierend auf von einer oder mehreren Sensoreinrichtungen empfangenen Sensorsignalen und/oder Steuerparametern anzusteuern. Das Ansteuern einer Funktionseinrichtung kann beispielsweise das Versorgen der Einrichtung elektrischer Energie umfassen. Dabei kann das Maß an elektrischer Energie vermittels der Steuereinrichtung einstellbar oder steuerbar sein. Elektrische Energie kann einer Funktionseinrichtung beispielsweise in Form eines elektrischen Stromes oder in Form von elektromagnetischer Strahlung bereitgestellt werden, etwa in Form von Mikrowellen und/oder durch Induktion. Ein Maß an zur Versorgung bereitgestellter elektrischer Energie kann beispielsweise durch Verändern einer Versorgungsspannung und/oder einer Stromstärke und/oder einer Strahlungsintensität und/oder einer Frequenz und/oder einer Pulsweite einstellbar sein. Eine Heizeinrichtung kann eine Heizeinrichtung sein, welche es vermag, elektrische Energie in Wärme umzusetzen. Eine Heizeinrichtung kann insbesondere ein oder mehrere Heizelemente aufweisen. Ein Heizelement kann ein Heizdraht sein, welcher zu einer Heizspule gewickelt sein kann. Ein Heizelement kann als eine Heizfolie ausgebildet sein. Eine Heizeinrichtung kann Versorgungsleitungen und/oder eine Quelle elektrischer Energie umfassen. Ein Heizdraht kann über zwei übergangslose Versorgungsleitungen mit elektrischem Strom versorgbar sein. Eine übergangslose Versorgungsleitung kann dabei eine Leitung sein, die aus einem Teil des Heizdrahtes besteht, der nicht zum Heizen verwendet wird. Eine derartige Versorgungsleitung kann beispielsweise dadurch hergestellt sein, dass ein für die Versorgung mit elektrischem Strom vorgesehener Teil des Heizdrahtes mit leitfähigem Material umwickelt wird, um ihn kurzzuschließen. Der umwickelte Teil des Heizdrahtes trägt dann im Wesentlichen nicht zur Heizwirkung des Heizelements bei. Eine Heizspule kann derart geschaltet sein, dass nur ein Teil ihrer Wicklung zur Heizung verwendet wird, insbesondere ein einer Ausgangsöffnung des Endstücks zuweisender Teil. Der andere Teil der Spule kann zur Stabilisierung und Stromversorgung dienen. Allgemein kann eine Steuereinrichtung dazu ausgebildet sein, eine Partikelstreuanlage anzusteuern, insbesondere eine Fördereinrichtung und/oder eine Dosiereinrichtung einer Partikelstreuanlage. Das Ansteuern einer Partikelstreuanlage kann dabei das Ansteuern der Partikelstreuanlage, insbesondere der Fördereinrichtung und/oder Dosiereinrichtung, derart bedeuten, dass sich der in die Partikelleiteinrichtung eingespeiste oder geförderte Partikelstrom ändert. Es kann vorgesehen sein, dass das Ansteuern der Partikelstreuanlage das Übermitteln von Steuerparametern and die Partikelstreuanlage und/oder eine Steuereinrichtung der Partikelstreuanlage umfasst. Datenübermittlung kann allgemein leitungsgebunden, etwa über einen metallischen oder optischen Leiter, und/oder über Funk erfolgen. Entsprechend können Einrichtungen, die zur Datenübermittlung verbunden oder verbindbar sind, eine zur Datenübermittlung geeignete Vorrichtung aufweisen, welche etwa eine Leitung, einen Sender und/oder einen Empfänger umfassen kann. Es kann eine gemeinsame Steuereinrichtung vorgesehen sein, welche mit mehr als einer Funktionseinrichtung des Endstücks verbunden und/oder zum Ansteuern einer weiteren Einrichtung wie der Partikelstreuanlage ausgebildet sein kann. Somit kann die Funktionalität von mehreren Steuereinrichtungen in einer gemeinsamen Steuereinrichtung zusammengeführt sein. Ein Schutzmantel kann dazu ausgebildet sein, von ihm umgebenes Material oder Strukturen vor mechanischer Beschädigung zu schützen. Ein Schutzmantel kann beispielsweise flexibel ausgebildet sein, etwa als ein Gewebe. Ein solches Gewebe kann beispielsweise Metall- und/oder Glasfasern und/oder andere Fasern umfassen. Allgemein kann ein Schutzmantel derart ausgebildet sein, dass er widerstandsfähiger gegen mechanische Beschädigung ist als ein Material, welches er umgibt. Es ist vorstellbar, dass ein Schutzmantel elektrisch leitfähig ausgebildet ist. Ein derartiger Schutzmantel kann als Bezugspotential für eine oder mehrere der Funktionseinrichtungen eines Endstücks ausgebildet sein, etwa indem eine elektrisch leitfähige Leitung den Schutzmantel mit mindestens einer der Funktionseinrichtungen verbindet. Ein Schutzmantel kann ein Endstück, insbesondere einen Außenumfang des Endstücks, etwa einen Außenumfang eines äußeren Schlauchstücks, und/oder eine ausgangsöffnungsseitige Stirnseite des Endstücks zumindest teilweise umgeben. Ein Schutzmantel kann am Endstück angeklebt oder vulkanisiert sein, beispielsweise an einem ersten und/oder äußeren Schlauchstück. Ein Endstück kann allgemein mindestens ein erstes Schlauchstück aufweisen, welches elastisch oder starr ausgebildet sein kann. Ein Schlauchstück kann allgemein ein anderes Schlauchstück ganz oder zumindest teilweise umgeben, wenn es beispielsweise einen Außenumfang des anderen Schlauchstücks ganz oder teilweise umgibt, etwa über einen Teil der Längserstreckung des Schlauchstücks. Das erste Schlauchstück kann zumindest teilweise in einem äußeren Schlauchstück aufgenommen sein und/oder zumindest teilweise von einem äußeren Schlauchstück umgeben sein. Dabei können das erste Schlauchstück und das äußere Schlauchstück einander berühren. Es kann zweckmäßig sein, wenn das äußere Schlauchstück eine ausgangsöffnungsseitige Stirnseite des ersten Schlauchstücks nicht überdeckt. Insbesondere dann, wenn das erste Schlauchstück starr ausgebildet ist, kann das äußere Schlauchstück elastisch ausgebildet sein. Dabei kann sich das äußere Schlauchstück in Richtung einer Partikelleiteinrichtung und/oder der Eingangsöffnung des Endstücks über das erste Schlauchstück hinaus erstrecken. Dies bietet die Möglichkeit, eine flexible Anbringung an die Partikelleiteinrichtung über das äußere Schlauchstück herzustellen. Es kann auch vorgesehen sein, dass das erste Schlauchstück und das äußere Schlauchstück elastische Schlauchstücke sind, die unterschiedliche Materialien aufweisen können, insbesondere unterschiedliche Silikonmaterialien. Es ist allgemein vorstellbar, dass sich die Wärmeleitfähigkeiten unterschiedlicher Schlauchstücke voneinander unterscheiden. Etwa kann die Wärmeleitfähigkeit des ersten Schlauchstücks größer sein als die Wärmeleitfähigkeit eines äußeren Schlauchstücks. Allgemein kann es zweckmäßig sein, wenn die Wärmeleitfähigkeit eines Schlauchstücks, welches ein anderes Schlauchstück zumindest teilweise umgibt oder zumindest teilweise aufnimmt, geringer ist als die Wärmeleitfähigkeit des von ihm umgebenen oder aufgenommenen Schlauchstücks. Somit ergibt sich eine Wärmeisolierung des Endstücks nach außen. Eine Heizeinrichtung oder ein Heizelement kann insbesondere in dem ersten Schlauchstück eingebettet sein und/oder in berührendem und/oder wärmeübertragendem Kontakt mit einem ersten Schlauchstück stehen. Allgemein kann vorgesehen sein, dass ein Endstück ein erstes Schlauchstück aufweist, welches zumindest teilweise von einem äußeren Schlauchstück mit einer niedrigeren Wärmeleitfähigkeit umgeben oder zumindest teilweise darin aufgenommen ist. Somit ergibt sich eine Wärmeisolierung nach außen. Eine Heizeinrichtung oder ein Heizelement kann innerhalb des ersten Schlauchstücks aufgenommen und/oder darin eingebettet sein oder derart zwischen dem ersten Schlauchstück und dem äußeren Schlauchstück angeordnet sein, dass es in berührendem oder wärmeleitendem Kontakt mit dem ersten Schlauchstück steht. Dadurch kann von der Heizeinrichtung oder dem Heizelement erzeugte Wärme über das Schlauchstück mit der höheren Wärmeleitfähigkeit wie gewünscht verteilt werden, während der Wärmeverlust nach außen reduziert ist. Ein derartig angeordnetes Heizelement, insbesondere eine Heizspule, kann außerdem das Endstück stabilisieren. Es ist vorstellbar, dass das Endstück ein starr ausgebildetes Anschlussstück aufweist, welches eingangsöffnungsseitig angeordnet sein kann. Ein Anschlussstück kann zur Stabilisierung und/oder Verbindung des Endstücks mit einer Partikelleiteinrichtung dienen, insbesondere zur Verbindung mit einem Partikelleitschlauch. Wenn ein Endstück eine Funktionseinrichtung umfasst, kann diese Funktionseinrichtung in berührendem Kontakt mit dem Endstück ausgebildet sein. Insbesondere kann die Funktionseinrichtung ganz oder zumindest teilweise innerhalb des Endstücks aufgenommen und/oder eingebettet sein, etwa innerhalb eines ersten Schlauchstücks oder innerhalb eines äußeren Schlauchstücks und/oder zwischen einem ersten Schlauchstück und einem äußeren Schlauchstück des Endstücks. Es ist auch vorstellbar, dass eine Funktionseinrichtung des Endstücks von dem Endstück gelagert oder gehalten ist, etwa an einem Außenumfang des Endstücks. Eine Funktionseinrichtung kann zur Einbettung mit einem Material eines Schlauchstücks umspritzt werden. Dies kann insbesondere zum Einbetten von Heizelementen wie Heizdrähten zweckmäßig sein. Eine oder mehr als eine Funktionseinrichtung kann zumindest teilweise zwischen einem ersten Schlauchstück und einem äußeren Schlauchstück und/oder zwischen einem ersten Schlauchstück und einem inneren Schlauchstück angeordnet sein. Die Funktionseinrichtung kann in einem berührenden und/oder wärmeleitenden Kontakt mit dem ersten Schlauchstück und/oder inneren Schlauchstück stehen. Insbesondere dann, wenn die Funktionswärmedichtung eine Heizeinrichtung umfasst oder als solche ausgebildet ist, kann somit die von der Heizeinrichtung erzeugte Wärme gut auf den Innenbereich des Endstücks übertragen werden. Ein Schutzmantel kann die Funktionseinrichtungen des Endstücks umgeben.

Die eingangs genannte 2005/077679 A1 beschreibt ein Endstück einer Partikelstreuanlage. Das Endstück umfasst eine Sensoreinrichtung in Form von zwei Fotosensoren, die an gegenüberliegenden Seiten eines Partikelströmungsraumes angeordnet sind und die Funktion der Partikelstreuanlage überwachen.

Die DE 42 02 413 A1 beschreibt ein Endstück einer Partikelstreuanlage mit einem elektrischen Heizwendel.

Die DE 297 11 805 U1 beschreibt das Endstück für eine Partikelstreuanlage, wobei ein Heizstab an der äußeren Hülle des Endstücks angeordnet ist.

Die vorliegende Erfindung betrifft ein Endstück für eine Partikelstreuanlage für ein Schienenfahrzeug mit einem ersten Schlauchstück und mindestens einer Sensoreinrichtung. Das Endstück ist als flexibles Endstück ausgebildet. Somit ergibt sich ein Endstück, welches einerseits verhältnismäßig wenig anfällig für Kollisionen ist und das andererseits den Betrieb der Partikelstreuanlage zu überwachen vermag.

Die Sensoreinrichtung kann mit einer Steuereinrichtung verbunden oder verbindbar sein. Die Steuereinrichtung kann beispielsweise eine Steuereinrichtung der Partikelstreuanlage, eines Wagens des Schienenfahrzeugs oder des Schienenfahrzeugs sein.

Die Sensoreinrichtung kann eine Temperatursensoreinrichtung umfassen. Über die Temperatursensoreinrichtung lässt sich somit eine Temperatur des Endstücks ermitteln, die insbesondere für die Bildung von Eis im Bereich des Endstücks relevant ist.

Es kann vorgesehen sein, dass die Temperatursensoreinrichtung es vermag, eine Temperatur in einem Partikelströmungsraum des Endstücks und/oder innerhalb des ersten Schlauchstücks zu erfassen. Zum Erfassen der Temperatur kann jeweils ein geeignet angeordneter Messfühler vorhanden sein. Die Temperatur eines ersten Schlauchstücks, welches einen Partikelströmungsraum definieren kann, oder innerhalb des Partikelströmungsraums ist besonders wichtig für das Bilden von Eis, welches einen Partikelstrom behindern kann. Somit kann die Gefahr der Eisbildung erkannt werden.

Das Endstück kann ferner eine Heizeinrichtung aufweisen. Somit kann einer Eisbildung entgegengewirkt werden oder Eis im Endstück abgetaut werden.

Die mindestens eine Sensoreinrichtung umfasst eine Fördersensoreinrichtung. Durch die Fördersensoreinrichtung ist es möglich, einen Partikelstrom im letzten Teil der Partikelstreuanlage zu erfassen, durch den er hindurchströmt. Somit kann eine Überwachung des ausgebrachten Partikelstroms erfolgen.

Die Fördersensoreinrichtung umfasst eine Antenne, welche einen Partikelströmungsraum des Endstücks umgibt. Über die Antenne können beispielsweise Ladungsverschiebungen erfasst werden, welche sich durch den Partikelstrom ergeben, und/oder es können Kapazitätsänderungen erfasst werden, die sich durch die Dichte oder Dichteänderungen des Partikelstromes und/oder seiner dielektrischen Eigenschaften ergeben können. Dies ermöglicht eine berührungslose Erfassung des Partikelstroms und/oder seiner Dichte.

Das Endstück kann eine elektronische Steuereinrichtung umfassen, welche mit der Sensoreinrichtung verbunden ist. Somit kann eine Steuereinrichtung, welche insbesondere zur Auswertung von Daten der Sensoreinrichtung ausgebildet sein kann, direkt am Endstück bei den Sensoren angeordnet sein.

Das Endstück kann zumindest teilweise von einem Schutzmantel umgeben sein. Ein solcher Schutzmantel kann dazu ausgebildet sein, das Endstück vor mechanischen Schäden zu schützen.

Die Erfindung betrifft außerdem eine Partikelstreuanlage für ein Schienenfahrzeug mit einer Partikelleiteinrichtung, an welcher mindestens ein hierin beschriebenes Endstück angebracht oder anbringbar ist.

Darüber hinaus betrifft die Erfindung ein Schienenfahrzeug mit einer hierin beschriebenen Partikelstreuanlage.

Die Erfindung wird nun mit Bezug auf die begleitenden Zeichnungen anhand bevorzugter Ausführungsformen beispielhaft erläutert.

Es zeigen:
- Figur 1: eine erste Variante eines Endstücks für eine Partikelstreuanlage;
- Figur 2: eine zweite Variante eines Endstücks für eine Partikelstreuanlage;
- Figur 3: eine dritte Variante eines Endstücks für eine Partikelstreuanlage;
- Figur 4: eine vierte Variante eines Endstücks für eine Partikelstreuanlage;
- Figur 5: eine fünfte Variante eines Endstücks für eine Partikelstreuanlage;
- Figur 6: eine sechste Variante eines Endstücks für eine Partikelstreuanlage; und
- Figur 7: eine siebte Variante eines Endstücks für eine Partikelstreuanlage.

Im Folgenden werden funktional ähnliche oder gleiche Teile mit Bezugszeichen versehen, die sich lediglich durch hinzugefügte unterschiedliche kleine Buchstaben voneinander unterscheiden.

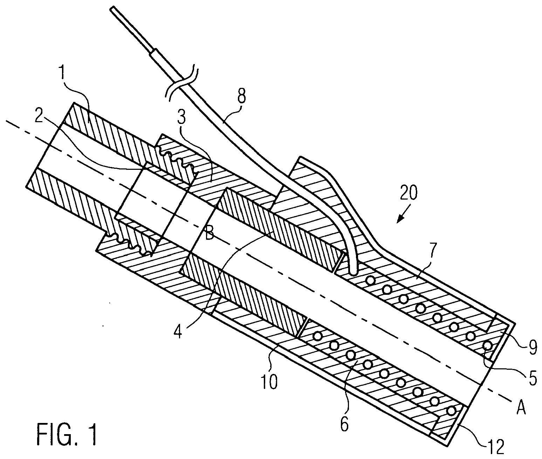

Figur 1 zeigt eine erste Variante eines Endstücks 20 für eine Partikelstreuanlage für ein Schienenfahrzeug. Das Endstück 20 ist an einem Partikelleitschlauch 1 der Partikelstreuanlage angeschlossen. Der Anschluss erfolgt in diesem Beispiel über eine in dem Leitschlauch 1 aufgenommene Stützhülse 2 und einen Adapter 3. Das Endstück 20 umfasst ein Anschlussstück 4, welches aus einem starren Material ausgebildet ist, beispielsweise einem Metall oder Kunststoff. Die dem Partikelleitschlauch 1 zugewandte Öffnung des Anschlussstücks 4 bildet eine Eingangsöffnung B des Endstücks 20. An der gegenüberliegenden Öffnung des Anschlussstücks 4 ist ein flexibles erstes Schlauchstück 6 vorgesehen, welches eine Ausgangsöffnung A bildet. Zwischen der Eingangsöffnung B und der Ausgangsöffnung A ist ein Partikelströmungsraum des Endstücks ausgebildet. Der Innendurchmesser des Anschlussstücks 4 entspricht dem Innendurchmesser des Schlauchstücks 6. In diesem Beispiel entspricht der Innendurchmesser des Anschlussrohrs 4 außerdem dem Innendurchmesser des Partikelleitschlauchs 1, so dass sich für einen aus dem Partikelleitschlauch 1 in das Endstück 20 übertretenden Partikelstrom keine Strömungsquerschnittsverjüngung ergibt. Das erste Schlauchstück 6 ist zumindest teilweise von einem äußeren Schlauchstück 7 umgeben, welches auch das Anschlussstück 4 teilweise umgibt. Das erste Schlauchstück 6 besteht aus einem elastischen Material, etwa einem Silikonmaterial. Das äußere Schlauchstück 7 besteht ebenfalls aus einem elastischen Material, etwa einem Silikonmaterial. Die Materialien des ersten Schlauchstücks 6 und des äußeren Schlauchstücks 7 unterscheiden sich allerdings zumindest hinsichtlich ihrer Wärmeleitfähigkeit. Es ist vorgesehen, dass die Wärmeleitfähigkeit des Materials des ersten Schlauchstücks 6 höher ist als die Wärmeleitfähigkeit des äußeren Schlauchstücks 7. Es ist vorgesehen, dass die Stirnseite 9 im Bereich der Ausgangsöffnung A vom Material des ersten Schlauchstücks 6 gebildet wird und dass die Stirnseite 9 nicht durch Material des äußeren Schlauchstücks 7 überdeckt ist. Somit kann die hohe Wärmeleitfähigkeit des ersten Schlauchstücks 6 zum Erwärmen der Stirnseite 9 genutzt werden. Das Endstück 20 ist in diesem Beispiel von einem flexiblen Schutzmantel 10 umgeben, der insbesondere den Außenumfang des äußeren Schlauchstücks 7 umgibt. Der Schutzmantel 10 ist derart ausgebildet, dass er einen mechanischen Schutz des Endstücks 20 bietet und kann beispielsweise aus einem geeigneten Gewebematerial bestehen, etwa einem Metallgewebe. Es ist auch vorgesehen, dass die Stirnseite 9 durch einen entsprechenden Schutzmantel 12 umgeben ist, wobei in diesem Bereich der Schutzmantel 12 direkt auf dem Material des ersten Schlauchstücks 6 angebracht ist. Es kann vorgesehen sein, dass der Schutzmantel jeweils stoffschlüssig angebracht ist. Der Schutzmantel kann beispielsweise aufgeklebt, vulkanisiert oder auf sonstige geeignete Art angebracht sein. Innerhalb des ersten Schlauchstücks 6 ist ein Heizelement 5 aufgenommen, welches in diesem Beispiel als ein Heizdraht ausgebildet ist, der zu einer Spule gewickelt ist. Es kann auch vorgesehen sein, dass der Heizdraht um das erste Schlauchstück 6 gewickelt ist und es am Außenumfang berührt. Der Heizdraht des Heizelements 5 schließt übergangslos an ein Anschlusskabel 8 an. Dies bedeutet, dass der Heizdraht ununterbrochen in das Anschlusskabel 8 übergeht, ohne dass Verbindungsstellen oder Lötstellen notwendig sind. Somit ergeben sich keine Anschlussstellen, die brechen könnten. Das Heizelement 5 kann als eine Heizeinrichtung angesehen werden, welche eine Funktionseinrichtung des Endstücks 20 darstellt. Das Anschlusskabel 8 ist durch das äußere Schlauchstück 7 geführt und kann beispielsweise mit einer Stromquelle und/oder einer Steuereinrichtung verbunden oder verbindbar sein. Das äußere Schlauchstück 7 kann auf das Anschlussstück 4 vulkanisiert sein. Durch die Verwendung flexiblen oder elastischen Materials für das erste Schlauchstück 6, das äußere Schlauchstück 7 und den Schutzmantel 10 ist das Endstück 20 insgesamt flexibel ausgebildet, so dass sich die Ausgangsöffnung relativ zur Eingangsöffnung verschieben lässt. Durch die Heizeinrichtung kann eine Vereisung dort verhindert werden, wo die Partikelstreuanlage in direktem Kontakt mit der Umgebung steht, wo sich also besonders leicht Eis bilden kann.

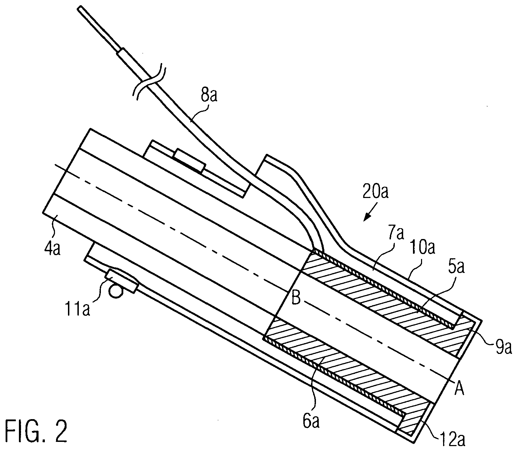

Figur 2 zeigt eine weitere Variante eines Endstücks 20a. Dieses Endstück 20a ist zur Verbindung mit einem starren Partikelleitrohr 4a vorgesehen. Ähnlich wie in Figur 1 gezeigt, umfasst das Endstück 20a ein flexibles erstes Schlauchstück 6a und ein flexibles äußeres Schlauchstück 7a, welches das erste Schlauchstück 6a umgibt. Die Wärmeleitfähigkeit des ersten Schlauchstücks 6a ist höher als die Wärmeleitfähigkeit des äußeren Schlauchstücks 7a. Die nach außen zeigende Stirnseite 9a des Endstücks 20a ist durch das Material des ersten Schlauchstücks 6a gebildet. Ein Schutzmantel 10a, 12a umgibt das Endstück 20a, insbesondere das äußere Schlauchstück 7a und die Stirnseite 9a des ersten Schlauchstücks 6a. Statt eines spulenartigen Heizelements 5 ist in dieser Variante ein flächiges Heizelement wie eine Heizfolie 5a vorgesehen, welche zwischen dem ersten Schlauchstück 6a und dem äußeren Schlauchstück 7a angeordnet ist. Über ein Anschlusskabel 8a ist die Heizfolie 5a an eine Stromversorgung und/oder eine Steuerung anschließbar. Die Heizfolie 5a stellt ein Heizelement einer als Funktionseinrichtung anzusehenden Heizeinrichtung dar. Das äußere Schlauchstück 7a erstreckt sich in Richtung der Eingangsöffnung des Endstücks 20a über das erste Schlauchstück 6a hinaus. Es bildet eine kragenartige Struktur, welche im montierten Zustand das Partikelleitrohr 4a umgibt. Über eine Verbindungsschelle 11a, welche das äußere Schlauchstück 7a im Bereich des Partikelleitrohrs 4a zusammendrückt, ist das Endstück 20a am Partikelleitrohr 4a angebracht. Somit werden in dieser Variante die Eingangsöffnung B und die Ausgangsöffnung A des Endstücks 20a durch das erste Schlauchstück 6a bereitgestellt. Auch in dieser Variante ist durch die elastischen und flexiblen Eigenschaften des ersten Schlauchstücks 6a, der Heizfolie 5a, des äußeren Schlauchstücks 7a und des Schutzmantels 10a die Flexibilität des Endstücks gewährleistet. Insbesondere kann die Ausgangsöffnung A relativ zur Eingangsöffnung B bewegt werden.

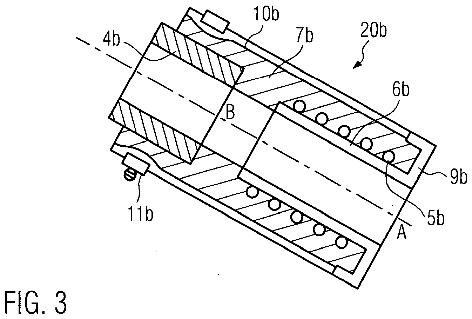

Figur 3 zeigt eine weitere Variante eines Endstücks 20b. In diesem Beispiel ist eine starre Schlauchhülse 6b als erstes Schlauchstück vorgesehen. Die starre Schlauchhülse 6b ist mit einem zu einer Heizspule 5b gewickelten Heizdraht umwickelt, welcher ein Heizelement 5b einer als Funktionseinrichtung anzusehenden Heizeinrichtung bildet. Die Heizspule steht in berührendem oder wärmeleitendem Kontakt mit der starren Schlauchhülse 6b. Die starre Schlauchhülse 6b ist zweckmäßig aus einem gut wärmeleitendem Material wie etwa einem Metall hergestellt. Über ein nicht gezeigtes Anschlusskabel ist das Heizelement 5b mit elektrischem Strom versorgbar. Dabei kann das Anschlusskabel übergangslos mit dem Heizelement 5b verbunden sein. Es ist auch vorstellbar, dass das Heizelement 5b über elektromagnetische Wellen wie beispielsweise Mikrowellen oder induktiv mit elektrischer Energie versorgt wird oder versorgbar ist. Es kann vorgesehen sein, dass das Heizelement 5b elektrisch von der starren Schlauchhülse 6b isoliert ist. Dazu kann eine geeignete Isolationsschicht zwischen Heizelement 5b und der starren Schlauchhülse 6b vorgesehen sein. Die starre innere Schlauchhülse 6b bildet in diesem Beispiel außerdem die Stirnseite 9b des Endstücks 20b und eine Ausgangsöffnung A aus. Außerdem formt die Schlauchhülse eine Art Umkragung im Bereich der Ausgangsöffnung, welche einen Teil der Außenwandung des Endstücks 20b bildet. Die Schlauchhülse 6b ist von einem elastischen äußeren Schlauchstück 7b umgeben, welches sich in Richtung eines Partikelleitrohrs 4b über die starre Schlauchhülse 6b hinaus erstreckt. Für den Fall, dass die Schlauchhülse 6b elektrisch leitfähig ist, kann vorgesehen sein, die Schlauchhülse 6b als Antenne einer Fördersensoreinrichtung auszubilden oder zu verwenden, welche als Funktionseinrichtung des Endstücks angesehen werden kann. Dabei kann die Schlauchhülse 6b zur Datenübermittlung mit einer Steuereinrichtung verbunden oder verbindbar sein, die es vermag, übermittelte Daten bezüglich des Partikelstroms auszuwerten. Dazu kann ein geeigneter elektrischer Leiter vorgesehen sein. Eine Eingangsöffnung B wird durch das erste Schlauchstück 7b dort definiert, wo ein Partikelstrom aus dem Partikelleitrohr 4b in den Partikelströmungsraum innerhalb des ersten Schlauchstücks 7b einzuströmen vermag. Der Innendurchmesser der Schlauchhülse 6b entspricht dem Innendurchmesser des Schlauchstücks 7b in dem Bereich zwischen der Schlauchhülse 6b und der Eingangsöffnung B. Insgesamt ergibt sich ein gleichmäßiger Innendurchmesser für den Partikelströmungsbereich im Endstück 20b. Das äußere Schlauchstück 7b ist ferner dazu ausgebildet, einen unteren Teil des Partikelleitrohrs 4b zu umgeben und wird durch eine Schellenanordnung 11b derart gegen das Partikelleitrohr 4b gedrückt, dass sich eine kraftschlüssige Verbindung zwischen Partikelleitrohr 4b und Endstück 20b ergibt. Der Innendurchmesser des Partikelströmungsraums des Endstücks 20b entspricht dem Innendurchmesser des Partikelleitrohrs 4b, so dass sich auch in dieser Variante für einen Partikelstrom keine Verjüngung des Strömungsquerschnitts ergibt. Im Bereich der Ausgangsöffnung A des Endstücks 20b ist das äußere Schlauchstück 7b in der durch die Schlauchhülse 6b gebildeten Ummantelung aufgenommen. Es ist ferner ein elastischer Schutzmantel 10b vorgesehen, welcher den restlichen Umfangsbereich des Schlauchstücks 7b umgibt. Das Schlauchstück 7b ist aus einem elastischen Material mit einer Wärmeleitfähigkeit ausgebildet, die geringer ist als die Wärmeleitfähigkeit der Schlauchhülse 6b. Somit ergibt sich einerseits eine Wärmeisolierung nach außen. Andererseits wird durch die Elastizität des Schlauchstücks 7b sichergestellt, dass sich die Ausgangsöffnung A im montierten Zustand relativ zur Eingangsöffnung B bewegen lässt. Somit ergibt sich auch in dieser Variante ein flexibles Endstück. Durch das Verwenden einer Fördersensoreinrichtung im Endstück kann eine Überwachung des tatsächlich ausgebrachten Partikelstroms durchgeführt werden.

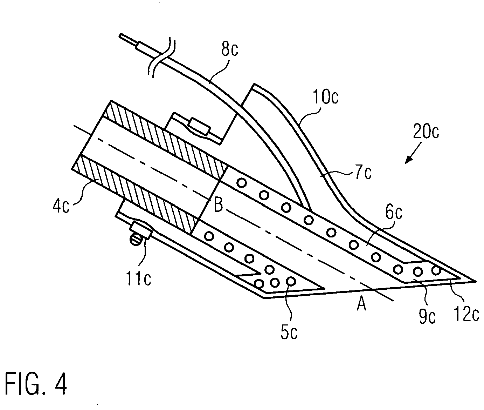

Figur 4 zeigt eine vierte Variante eines Endstücks 20c. In diesem Beispiel ist ein Heizelement 5c in einem ersten Schlauchstück 6c aus einem elastischen Material aufgenommen. Das Heizelement 5c ist über einen übergangsloses Anschlusskabel 8c mit einer Stromversorgung verbunden oder verbindbar und kann als Teil einer eine Funktionseinrichtung bildenden Heizeinrichtung angesehen werden. Das erste Schlauchstück 6c bildet außerdem eine Stirnseite 9c im Bereich der Ausgangsöffnung A. Das erste Schlauchstück 6c definiert eine Ausgangsöffnung A und eine Eingangsöffnung B. Die Ausgangsöffnung A ist im Vergleich zur Eingangsöffnung B abgeschrägt. Die Querschnittsfläche der Eingangsöffnung B ist kleiner als die Querschnittsfläche der Ausgangsöffnung A. Es ist ein äußeres Schlauchstück 7c vorgesehen, welches das erste Schlauchstück 6c umgibt und sich über die Eingangsöffnung B hinaus in Richtung eines starren Partikelleitrohrs 4c der Partikelstreuanlage erstreckt. Das äußere Schlauchstück 7c ist aus einem elastischen Material ausgebildet, dessen Wärmeleitfähigkeit geringer ist als die Wärmeleitfähigkeit des elastischen Materials des ersten Schlauchstücks 6c. Der Umfangsbereich des äußeren Schlauchstücks 7c ist ähnlich wie die Stirnseite 9c des ersten Schlauchstücks 6c von einem Schutzmantel 10c, 12c umgeben. Über eine Schellenanordnung 11c ist das äußere Schlauchstück 7c eingangsöffnungsseitig kraftschlüssig mit dem Partikelleitrohr 4c verbunden. Durch die Elastizität der Schlauchstücke 6c und 7c ergibt sich auch in dieser Variante ein flexibles Endstück 20c.

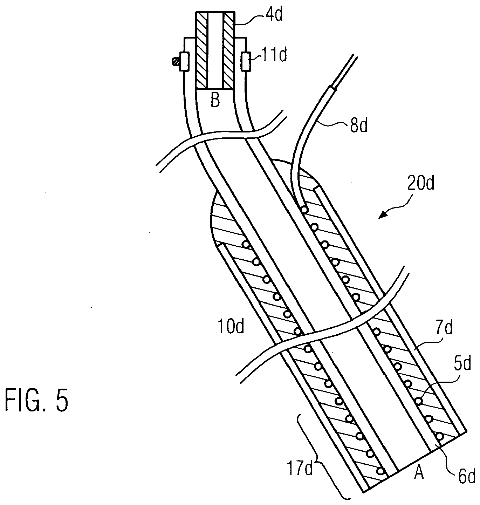

Figur 5 zeigt eine weitere Variante eines Endstücks 20d. Das Endstück 20d weist ein erstes elastisches Schlauchstück 6d auf, welches eine Ausgangsöffnung A und eine Eingangsöffnung B definiert. Das erste Schlauchstück 6d erstreckt sich in Richtung eines starren Partikelleitrohrs 4d über die Eingangsöffnung B hinaus. Der innere Durchmesser des ersten Schlauchstücks 6d ist derart gewählt, dass es die Außenwandung des Partikelleitrohrs 4d zu umgeben vermag. Über eine Schelle 11d wird das erste Schlauchstück 6d derart mit dem Außenwandbereich des Partikelleitrohrs 4d verbunden, dass ein Partikelstrom aus dem Partikelleitrohr 4d über die Eingangsöffnung B in das Endstück 20d einströmen kann, insbesondere in einen Partikelströmungsraum innerhalb des ersten Schlauchstücks 6d. Um das erste Schlauchstück 6d ist ein Heizdraht 5d zu einer Heizspule gewickelt, welcher übergangslos über ein Anschlusskabel 8d mit einer Stromversorgung verbunden oder verbindbar sein kann. Das erste Schlauchstück 6d ist über einen Teil seiner Längserstreckung von einem äußeren Schlauchstück 7d umgeben. Das Material des äußeren Schlauchstücks 7d ist ebenfalls elastisch, weist aber eine niedrigere Wärmeleitfähigkeit auf als das Material des ersten Schlauchstücks 6d. Der Heizdraht 5d ist zwischen dem ersten Schlauchstück 6d und dem äußeren Schlauchstück 7d angeordnet und steht in berührendem Kontakt mit einer Außenseite des ersten Schlauchstücks 6d. Der Heizdraht 5d kann als Teil einer als Funktionseinrichtung des Endstücks wirkenden Heizeinrichtung angesehen werden. Es kann vorgesehen sein, dass das Anschlusskabel 8d und der Heizdraht 5d derart ausgebildet sind, dass nur ein unterer Bereich 17d als Heizelement 5d wirken und der Heizdraht 5d oberhalb des Bereichs 17d zum Bereitstellen eines Stroms und zur Stabilisierung des ersten Schlauchstücks 6d ausgebildet ist, aber im Wesentlichen nicht zur Heizwirkung beiträgt. Somit wird insbesondere der Bereich des Endstücks 20d geheizt, in welchem sich besonders leicht Wasser und Eis absetzen kann. Das Anschlusskabel 8d wird in einem dem Partikelleitrohr 4d naheliegenden Bereich des äußeren Schlauchstücks 7d aus dem äußeren Schlauchstück 7d geführt. Das äußere Schlauchstück 7d ist vom Bereich der Ausgangsöffnung A bis etwa zu dem Bereich, in welchem das Anschlusskabel 8d herausgeführt wird oder in etwa über einen Bereich, welcher der Erstreckung der Heizspule 5d entspricht, von einem Schutzmantel 10d umgeben. In dieser Variante ergibt sich bereits durch die Flexibilität des elastischen Schlauchstücks 6d eine Flexibilität des Endstücks 20d. Somit kann vorgesehen sein, dass das äußere Schlauchstück 7d und/oder der Schutzmantel 10d aus einem wenig elastischen oder gar starren Material hergestellt ist, da sich allein durch die Flexibilität und flexible Anbindung des ersten Schlauchstücks 6d eine Verschiebbarkeit der Ausgangsöffnung A relativ zur Eingangsöffnung B ergibt.

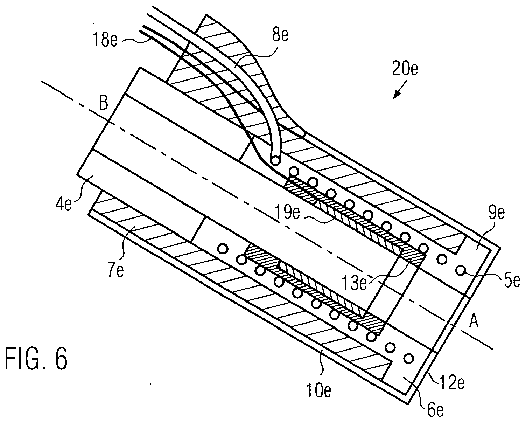

Figur 6 zeigt eine sechste Variante eines Endstücks 20e. In diesem Beispiel ist vorgesehen, dass ein starres Anschlussstück 4e des Endstücks 20e mit einem nicht gezeigten Partikelleitrohr oder Partikelleitschlauch verbindbar ist, beispielsweise wie mit Bezug auf Figur 1 beschrieben. Das Anschlussstück 4e bildet eine Eingangsöffnung B, durch welche ein Partikelstrom in das Endstück 20e eingespeist werden kann, sowie einen Teil eines Partikelströmungsraums innerhalb des Endstücks 20e. An das Anschlussstück 4e schließt ein erstes Schlauchstück 6e an, welches eine Fortsetzung des Partikelströmungsbereichs bildet und eine Ausgangsöffnung A bereitstellt. Außerdem bildet das Material des inneren Schlauchstücks 6e einen Stirnbereich 9e im Bereich der Ausgangsöffnung. Es kann vorgesehen sein, dass das erste Schlauchstück 6e kraft- oder stoffschlüssig mit dem Anschlussstück 4e verbunden ist. Beispielsweise kann das erste Schlauchstück 6e an seiner anschlussstückseitigen Stirnseite an das Anschlussstück 4e vulkanisiert oder geklebt sein. Es ist ferner ein äußeres Schlauchstück 7e vorgesehen, welches den Bereich des ersten Schlauchstück 6e umgibt, der nicht die Stirnseite 9e bildet. Das äußere Schlauchstück 7e umgibt außerdem zumindest einen Teilbereich des Anschlussstücks 4e. Das äußere Schlauchstück 7e ist aus einem elastischen Material mit einer geringeren Wärmeleitfähigkeit ausgebildet als sie das elastische Material des inneren Schlauchstücks 6e aufweist. Ähnlich wie mit Bezug auf die anderen Figuren beschrieben, ist ein Schutzmantel 10e und 12e vorgesehen. In das Material des inneren Schlauchstücks 6e eingebettet ist ein Heizelement 5e, das in diesem Beispiel als ein zu einer Spule gewickelter Heizdraht ausgeführt ist, welcher über eine übergangslose Verbindung zu einem Anschlusskabel 18e geführt ist. Das Heizelement stellt einen Teil einer als Funktionseinrichtung des Endstücks 20e anzusehenden Funktionseinrichtung dar. Es ist ferner eine Antenne 19e vorgesehen, welche in einem Innenwandbereich des ersten Schlauchstücks 6e ausgebildet ist. Die Antenne 19e kann beispielsweise mindestens einen ringförmigen Bereich oder mehrere, elektrisch voneinander getrennte ringförmige Bereiche aufweisen. Die Antenne 19e kann als Teil einer Fördersensoreinrichtung angesehen werden, welche eine weitere Funktionseinrichtung des Endstücks 20e bildet. Zweckmäßigerweise ist die Antenne 19e durch eine elektrisch nicht leitfähige Hülse 13e von dem ersten Schlauchstück 6e und/oder dem Heizelement 5e elektrisch isoliert. Ein durch das äußere Schlauchstück 7e geführtes Anschlusskabel 18e weist mindestens eine Anschlussleitung auf, welche mit der Antenne 19e verbunden ist. Es ist ein Schutzmantel 12e vorgesehen, welcher das erste Schlauchstück 6e stirnseitig umgibt und einen mechanischen Schutz für die Stirnseite 9e bildet. Ferner ist ein Gewebeschutz 10e vorgesehen, welcher den Umfang des äußeren Schlauchstücks 7e im Wesentlichen in einem Bereich umgibt, in welchem sich die Heizspule 5e erstreckt. Der Schutzmantel 10e ist aus einem gegen mechanische Einwirkungen robusten, elektrisch leitfähigen Gewebe ausgebildet, insbesondere aus einem metallischen Gewebe. Mindestens eine Leitung des Anschlusskabels 18e ist elektrisch leitend mit dem Schutzmantel 10e verbunden. Somit kann der Schutzmantel 10e als Bezugspotential für die über das elektrische Anschlusskabel 18e verbundene Funktionseinrichtungen Antenne 19e und Heizelement 5e und/oder gegebenenfalls eine angeschlossene elektronische Steuereinrichtung dienen. Durch die elastischen Eigenschaften des ersten Schlauchstücks 6e und des äußeren Schlauchstücks 7e lässt sich die Ausgangsöffnung A relativ zur Eingangsöffnung verschieben. Somit ist das Endstück 20e ebenfalls ein flexibles Endstück.

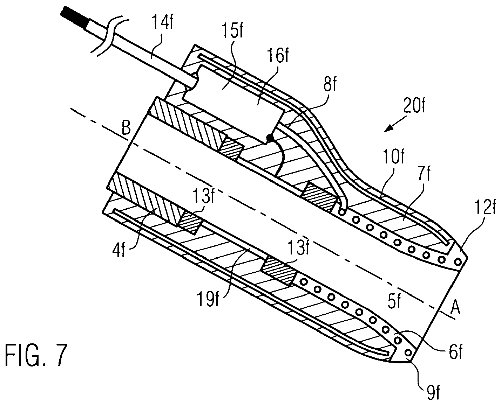

Figur 7 zeigt eine weitere Variante eines Endstücks 20f. Das Endstück 20f umfasst ein erstes Schlauchstück 6f, welches einen Teil eines Partikelströmungsraums und eine Ausgangsöffnung A des Endstücks 20f definiert. Im Bereich der Ausgangsöffnung A bildet das erste Schlauchstück 6f außerdem einen Stirnbereich 9f. In das Material des ersten Schlauchstücks 6f eingebettet ist ein Heizelement 5f, welches in diesem Beispiel als ein zu einer Heizspule geformter Heizdraht ausgeführt ist, welcher übergangslos über ein Anschlusskabel 8f an eine elektronische Steuereinrichtung 15f angeschlossen ist. Das Heizelement 5f kann als Teil einer eine Funktionseinrichtung darstellenden Heizeinrichtung angesehen werden. Eingangsöffnungsseitig schließt an das erste Schlauchstück 6f eine elektrisch nicht leitfähige Hülse 13f an, welche eine an die Hülse 13f anschließende Antenne 19f elektrisch von dem ersten Schlauchstück 6f isoliert. Die Antenne 19f ist über ein nicht bezeichnetes Anschlusskabel mit der elektronischen Steuereinrichtung 15f verbunden. Die Antenne 19f kann als Teil einer eine weitere Funktionseinrichtung des Endstücks darstellenden Fördersensoreinrichtung angesehen werden. Eingangsöffnungsseitig schließt an die Antenne 19f eine zweite elektrisch nicht leitende Hülse 13f an, welche die Antenne 19f elektrisch von einem starren Anschlussstück 4f isoliert. Das Anschlussstück 4f bildet eine Eingangsöffnung B des Endstücks 20f und kann wie oben beschrieben mit einem Partikelleitschlauch oder einem Partikelleitrohr verbunden oder verbindbar sein. Ein äußeres Schlauchstück 7f umgibt das erste Schlauchstück 6f, die Hülsen 13f, die Antenne 19f und zumindest teilweise einen Außenumfang des Anschlussstücks 4f. Das äußere Schlauchstück weist eine niedrigere Wärmeleitfähigkeit auf als das erste Schlauchstück 6f und ist elektrisch nicht leitend ausgebildet. Das äußere Schlauchstück 7f ist wiederum durch einen Schutzmantel 10f umgeben, der in diesem Beispiel aus einem elektrisch leitfähigen Gewebematerial ausgebildet ist. Es ist ferner ein stirnseitiger Schutzmantel 12f vorgesehen, der aus einem anderen Material hergestellt sein kann als der Schutzmantel 10f, aber nicht muss. Die Steuereinrichtung 15f kann über eine elektrische Leitung mit dem Schutzmantel 10f verbunden sein, welcher ein Bezugspotential definieren kann. Wie zu erkennen ist, verbreitert sich der Innendurchmesser des Schlauchstücks 6f von seinem eingangsseitigen Ende bis zur Ausgangsöffnung A. Dies erleichtert es, eventuell vorhandenen angetauten Eisklumpen aus dem Endstück 20f zu fallen. Ferner verjüngt sich der Außendurchmesser des Schlauchstücks 7f gemeinsam mit der Stirnseite 9f zu Ausgangsöffnung A, wodurch sich der Außendurchmesser des Endstücks zur Ausgangsöffnung A hin verjüngt. Dies erleichtert es eventuell vorhandenen angetauten Eisklumpen, welche das Endstück etwa ringförmig umgeben, von dem Endstück 20f zu fallen. Die Steuereinrichtung 15f umfasst eine Temperatursensoreinrichtung 16f, welche einen Thermostat umfassen kann. Die Temperatursensoreinrichtung 16f kann eine oder mehrere Messfühler aufweisen, die zum Erfassen der Temperatur beispielsweise im Partikelströmungsbereich und/oder der Antenne 19f und/oder des ersten Schlauchstücks 6f und/oder des Anschlussstücks 4f ausgebildet sein können. Es kann auch vorgesehen sein, dass die Temperatursensoreinrichtung 16f zum Erfassen der Temperatur des Heizdrahts und/oder des Materials des ersten Schlauchstücks 6f und/oder des äußeren Schlauchstücks 7f ausgebildet ist. Es kann zweckmäßig sein, wenn ein Temperaturfühler der Temperatursensoreinrichtung 16f in einer der Hülsen 13f angeordnet ist und in wärmeübertragenden Kontakt und/oder physischen Kontakt mit dem Partikelströmungsbereich des Endstücks 20f angeordnet ist. Die Temperatursensoreinrichtung 16f kann als eine Funktionseinrichtung des Endstücks 20f angesehen werden. Die in Figur 7 gezeigte Variante weist mehrere elektrisch betriebene Funktionseinrichtungen auf, die als Teil des Endstücks ausgebildet sind. Eine dieser Funktionseinrichtungen umfasst das Heizelement 5f, welches zum Aufwärmen des Endstücks dient. Eine weitere Funktionseinrichtung ist durch die als Fördersensoreinrichtung wirkende Antenne 19f gegeben. Es kann vorgesehen sein, dass auch das Heizelement 5f oder nur das Heizelement 5f als Antenne für eine Fördersensoreinrichtung dient, wobei in diesem Fall die Antenne wegfallen kann. In diesem Fall kann die Steuereinrichtung 15f dazu ausgebildet sein, die Heizwirkung betreffenden Signale von den einen Partikelstrom betreffenden Signalen zu separieren. Eine weitere Funktionseinrichtung wird durch die Temperatursensoreinrichtung 16f gebildet, die zumindest teilweise als Teil der Steuereinrichtung 15f ausgebildet sein kann. Allgemein kann die Steuereinrichtung 15f dazu ausgebildet sein, die Heizeinrichtung, insbesondere das Heizelement 5f, basierend auf Signalen der Temperatursensoreinrichtung 16f zu steuern, insbesondere basierend auf einer von dieser Temperatursensoreinrichtung 16f gemessenen Temperatur. Die Steuereinrichtung 15f kann ferner dazu ausgebildet sein, Signale der Antenne 19f zu empfangen, weiterzuleiten und/oder auszuwerten. Es kann besonders zweckmäßig sein, wenn die Steuereinrichtung 15f dazu ausgebildet ist, über ein gemeinsames Anschlusskabel 14f an eine Steuereinrichtung und/oder zur Steuerung einer Partikelstreuanlage angeschlossen oder anschließbar zu sein. So kann beispielsweise vorgesehen sein, dass die Steuereinrichtung 15f dazu ausgebildet ist, die Partikelstreuanlage basierend auf Signalen von der Fördersensoreinrichtung anzusteuern, etwa basierend auf Messwerten von der Antenne 19f. Somit kann ein Steuer- oder Regelkreis beispielsweise im Bereich des Endstücks 20f ausgebildet sein, wodurch sichergestellt wird, dass eine gewünschte Partikelstreumenge auch dort anfällt, wo sie auf die Schiene aufgebracht werden soll. Es kann vorgesehen sein, dass die Steuereinrichtung 15f dazu ausgebildet ist, Steuerparameter von einer Steuereinrichtung des Schienenfahrzeugs oder der Partikelstreuanlage zu empfangen, welche beispielsweise eine gewünschte Streumenge und/oder einen gewünschten Partikelstrom angeben können. Wie in Figur 7 zu erkennen ist, sind die Funktionseinrichtungen im jeweils im ersten Schlauchstück 6f oder im äußeren Schlauchstück 7f eingebettet oder davon umgeben und somit innerhalb des Endstücks 20f aufgenommen. Insbesondere sind alle Funktionseinrichtungen von dem Schutzmantel 10f schützend umgeben.

### Bezugszeichenliste

- 1: Partikelleitschlauch
- 2: Stützhülse
- 3: Adapter
- 4: Anschlussstück
- 5: Heizelement
- 6: erstes Schlauchstück
- 7: äußeres Schlauchstück
- 8: Anschlusskabel
- 9: Stirnseite
- 10: Schutzmantel
- 11: Verbindungsschelle
- 12: Schutzmantel
- 13: elektrische Isolierung
- 14: Anschlusskabel
- 15: Steuereinrichtung
- 16: Temperatursensoreinrichtung
- 17: beheizter Bereich
- 18: Anschlusskabel
- 19: Antenne
- 20: Endstück
- A: Ausgangsöffnung
- B: Eingangsöffnung

## Patentansprüche

1. Endstück (20) für eine Partikelstreuanlage für ein Schienenfahrzeug mit
einem ersten Schlauchstück (6); und
mindestens einer Sensoreinrichtung;
wobei das Endstück (20) als flexibles Endstück ausgebildet ist, und
wobei ferner die mindestens eine Sensoreinrichtung eine Fördersensoreinrichtung (19) umfasst,
**dadurch gekennzeichnet, dass** die Fördersensoreinrichtung (19) eine Antenne umfasst, welche einen Partikelströmungsraum des Endstücks (20) umgibt.

2. Endstück nach Anspruch 1, wobei die mindestens eine Sensoreinrichtung ferner eine Temperatursensoreinrichtung (16) umfasst.

3. Endstück nach Anspruch 2, wobei die Temperatursensoreinrichtung (16) es vermag, eine Temperatur in einem Partikelströmungsraum des Endstücks (20) und/oder innerhalb des ersten Schlauchstücks zu erfassen.

4. Endstück nach Anspruch 2 oder 3, wobei das Endstück (20) ferner eine Heizeinrichtung aufweist.

5. Endstück nach einem der vorhergehenden Ansprüche, wobei das Endstück (20) eine elektronische Steuereinrichtung (15) umfasst, welche mit der Sensoreinrichtung verbunden ist.

6. Endstück nach einem der vorhergehenden Ansprüche, wobei das Endstück (20) zumindest teilweise von einem Schutzmantel (10) umgeben ist.

7. Partikelstreuanlage für ein Schienenfahrzeug mit einer Partikelleiteinrichtung, an welcher mindestens ein Endstück nach einem der vorhergehenden Ansprüche angebracht ist.

8. Schienenfahrzeug mit einer Partikelstreuanlage nach Anspruch 7.

## Claims

1. An endpiece (20) for a particle distribution system for a rail vehicle having a first hose piece (6); and at least one sensor device; the endpiece (20) being embodied as a flexible endpiece and, in addition, the at least one sensor device comprising a delivery sensor device (19), **characterised in that** the delivery sensor device (19) comprises an antenna, which surrounds a particle flow space of the endpiece (20).

2. An endpiece according to claim 1, the at least one sensor device also comprising a temperature sensor device (16).

3. An endpiece according to claim 2, the temperature sensor device (16) permitting a temperature to be detected in a particle flow space of the endpiece (20) and/or inside the first hose piece.

4. An endpiece according to claim 2 or 3, the endpiece (20) also having a heating device.

5. An endpiece according to any of the preceding claims, the endpiece (20) comprising an electronic control device (15) which is connected to the sensor device.

6. An endpiece according to any of the preceding claims, the endpiece (20) being at least partially surrounded by a protective sheath (10).

7. A particle distribution system for a rail vehicle having a particle-conducting device to which is fitted at least one endpiece as described in any of the previous claims.

8. A rail vehicle having a particle distribution system according to claim 7.

## Revendications

1. Embout (20) pour un système de dispersion de particules pour un véhicule ferroviaire, comprenant
une première pièce (6) de tuyau souple et
au moins un dispositif capteur;
dans lequel l'embout (20) est constitué sous la forme d'un embout souple et
dans lequel, en outre, le au moins un dispositif capteur comprend un dispositif (19) capteur de transport,
**caractérisé en ce que** le dispositif (19) capteur de transport comprend une antenne, qui entoure un espace d'écoulement de particules de l'embout (20).

2. Embout suivant la revendication 1, dans lequel le au moins un dispositif capteur comprend, en outre, un dispositif (16) capteur de température.

3. Embout suivant la revendication 2, dans lequel le dispositif (16) capteur de température permet de détecter une température dans un espace d'écoulement de particules de l'embout (20) et/ou à l'intérieur de la première pièce de tuyau souple.

4. Embout suivant la revendication 2 ou 3, dans lequel l'embout (20) a, en outre, un dispositif de chauffage.

5. Embout suivant l'une des revendications précédentes, dans lequel l'embout (20) comprend un dispositif (15) électronique de commande relié au dispositif capteur.

6. Embout suivant l'une des revendications précédentes, dans lequel l'embout (20) est entouré, au moins en partie, d'une gaine (10) de protection.

7. Système de dispersion de particules pour un véhicule ferroviaire comprenant un dispositif de conduite de particules sur lequel est monté un embout suivant l'une des revendications précédentes.

8. Véhicule ferroviaire ayant un système de dispersion de particules suivant la revendication 7.
